**Europäisches Patentamt**

(19) **European Patent Office**

**Office européen des brevets**

(11) Publication number: **0 164 236**
**B1**

(12) **EUROPEAN PATENT SPECIFICATION**

(45) Date of publication of patent specification: **28.02.90**  (51) Int. Cl.⁵: **A 41 F 9/00**

(21) Application number: **85303516.0**

(22) Date of filing: **20.05.85**

(54) **Waistband interlining.**

(30) Priority: **21.05.84 GB 8412911**

(43) Date of publication of application:
**11.12.85 Bulletin 85/50**

(45) Publication of the grant of the patent:
**28.02.90 Bulletin 90/09**

(84) Designated Contracting States:
**AT BE CH DE FR GB IT LI LU NL SE**

(56) References cited:
**DE-A-1 943 411**
**FR-A-2 099 524**
**FR-A-2 313 186**
**FR-A-2 444 110**
**GB-A-1 213 957**

(73) Proprietor: **H.G. GRAHAM & SON LIMITED**
**Camcol House Station Road**
**Morley Leeds, LS27 8JS (GB)**

(72) Inventor: **Wood, Stephen Arthur**
**58, Buck Stone Oval, Alwoodley**
**Leeds, LS17 5HH (GB)**

(74) Representative: **Votier, Sidney David et al**
**CARPMAELS & RANSFORD 43, Bloomsbury**
**Square**
**London WC1A 2RA (GB)**

Courier Press, Leamington Spa, England.

## Description

The present invention is concerned with the production of waistband interlinings.

It is conventional to produce waistband interlinings by cutting strips of appropriate length from relatively wide lengths, for example continuous lengths, of woven or non-woven material. The interlinings are suitably cut from full width piece goods in the warp (or wale) direction by cold shearing or by the use of a hot knife. A disadvantage associated with this method of producing interlinings is that the cut edges of the fabric are rough. In the case of hot cutting a strip containing nylon or other thermoplastics material in the weft, the edges become even more rough and brittle. When such a strip is inserted wholly or partially round the garment waistband, the weft threads, normally monofilaments, tend to protrude through the waistband shell fabric and may cause irritation to the wearer. When the interlining is a strip woven on a narrow loom the return bights of the weft, i.e. the selvedge, tend to break, with the same undesirable protrusion of points which may penetrate the shell waistband fabric, abrade the same and cause irritation to the wearer.

These disadvantages are overcome to a considerable extent by the process described in U.K. Patent Specification 1,213,957, according to which a continuous bead is applied to each cut edge of the interlining. One method for applying the continuous bead described in patent Specification 1,213,957 comprises continuously extruding a plastics composition onto the moving interlining strip. The continuous bead forms a finished edge which prevents the needle-like ends of the weft threads from penetrating or abrading the waistband shell fabric, which prevents displacement of the weft threads, and the material of which flows into the interstices of the interlining strip to unite the bead, warp and weft into an integrated whole.

Whilst the method of the above-mentioned Specification works well, the production of an interlining strip in accordance with the method from a full-width fabric involves two distinct operations, namely cutting the strip from the full width piece goods and then extruding the edge bead onto it. It is an object of the present invention to provide a method of producing a waistband interlining having a "smooth edge" wherein the cutting of the interlining strip and the provision of smooth edges thereon are carried out in a single operation.

FR—A—2 313 186 discloses a method of trimming fabric wherein the fabric is passed over a raised anvil whilst being subjected to ultrasound by means of a sonotrode.

According to the invention a method of producing a waistband interlining comprising weaving or knitting a fabric comprising warp threads and weft threads of which the weft threads are formed of a thermoplastics material, and cutting the fabric by passing the fabric between a pressing element and the horn of an ultrasonic generator whereby the weft threads are melted as they pass between said element and said horn and are caused to fuse into adjacent weft threads and/or adjacent warp threads and/or ancillary thermoplastics thread introduced between said element and said horn to form a continuous edge along the length of the cut fabric, is characterized in that the fabric to be cut is passed over the surface of said horn whereon it is contacted by said pressing element, the fabric is supported on both sides of the cutting line, the pressing element is stationary and the fabric is cut along lines parallel to the warp threads.

In its simplest form, the invention involves the melting of the weft threads and the fusing or "smearing" of their molten ends into each other to form a continuous edge. Additional strength can be obtained by causing the molten weft ends also to fuse into the adjacent warp, at least in places, or to the adjacent wale or course in the case of a knitted fabric.

Fusing of the weft ends to the warp can be of benefit when it is desired to keep the number of weft threads low, either for reasons of cost or to reduce the stiffness of the fabric in the weft direction.

In another embodiment of the invention the weft thread ends are fused into an ancillary thermoplastics thread intorduced between the pressing element and the horn of the untrasonic generator, this additional thread running parallel to the warp and being coincident with the parts of the weft being melted. The weft ends may be fused simply to this additional thread, or to the additional thread of each other, or to the additional thread, each other, and, at least at some points, to the warp or wale of the fabric. The use of the additional thermoplastics thread is of benefit when it is desired to keep the number of weft threads low, e.g. for the reasons mentioned above, or when for instance the particular desired running speed for the machine makes it difficult for the molten weft thread ends to flow into each other.

The weft of the woven or knitted fabric is of a thermoplastics material, and is suitably a thermoplastics monofilament, e.g. a polyamide such as nylon; the warp, of any suitable material, may for example be of cotton or spun polyester, and is preferably of polyester viscose spun staple fibres.

The precise configuration of the continuous edge formed on the cut fabric is controlled by the speed of traverse of the material past the sonic unit, the shape of the pressing element, the amount of ultrasonic energy applied, and the degree of cooling, both to the horn and above and below the fabric beyond the pressing element.

A machine for producing waistband interlinings using the method of the invention suitably comprises one or a number of stationary pressing elements positioned above one or more horns connected to ultrasonic generators. The machine also comprises means for feeding the fabric between the pressing elements and horns, means for drawing off cut fabric, and, where an ancillary thermoplastics thread is to be used, means for introducing such thread between the respective pressing elements and horns.

The machine is operated such that the molten thermoplastics material of the weft between each pressing element and associated horn forms a bead which "bridges" one monofilament in the weft to the next, and/or to the ancillary thread, and optionally fuses also into the adjacent warp or wale.

Various shapes or pressing elements may be used, depending upon the precise configuration which is required for the continuous edge. Preferably the diameter of the edge will be no greater than the thickness of the fabric, in order that no ridge will appear on the waistband shell fabric during garment wear.

The pressing elements are suitably made from steel and subjected to a hardening process. The horn of the ultrasonic generator is suitably manufactured from titanium and carbide-tipped steel.

The accompanying schematic drawings are given for the purpose of illustrating the invention.

In the drawings

Figure 1 is a cross-sectional elevation through an interlining strip of the invention, looking in the warp direction;

Figure 2 shows one form of apparatus for the production of interlining strips from full width fabric;

Figure 3 is a section of the line III—III of Figure 2;

Figure 4 shows part of Figure 3 on an enlarged scale;

Figure 5 shows one way of mounting the pressing elements;

Figure 6 shows a number of pressing element shapes; and

Figure 7 is a view similar to that of Figure 2, showing a modified apparatus for use with an ancillary thermoplastics thread.

Referring to the drawings, an interlining fabric strip in accordance with the invention comprises warp yarns 1 interwoven or knitted with weft yarns 2. The ends of the weft yarns 2 merge into continuous edges 3.

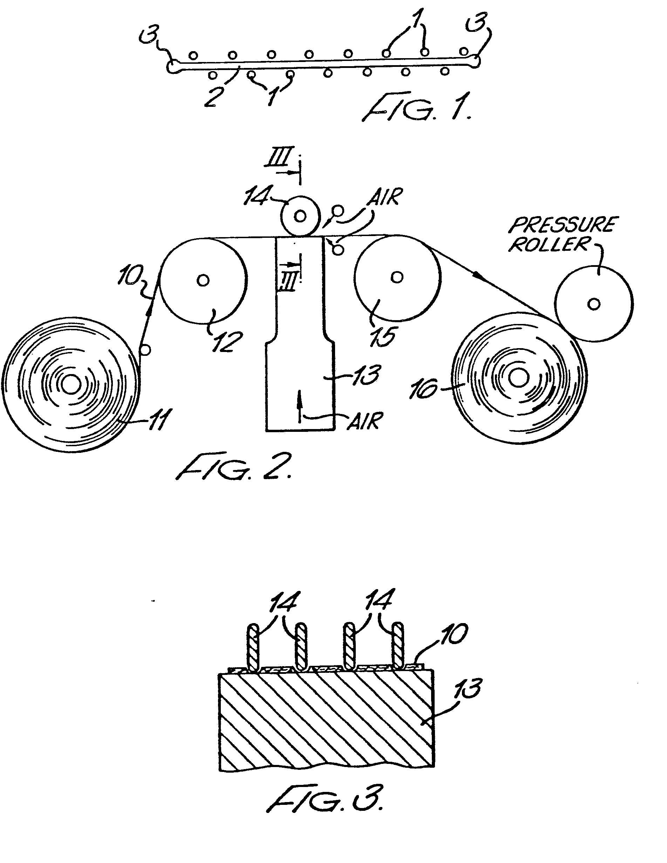

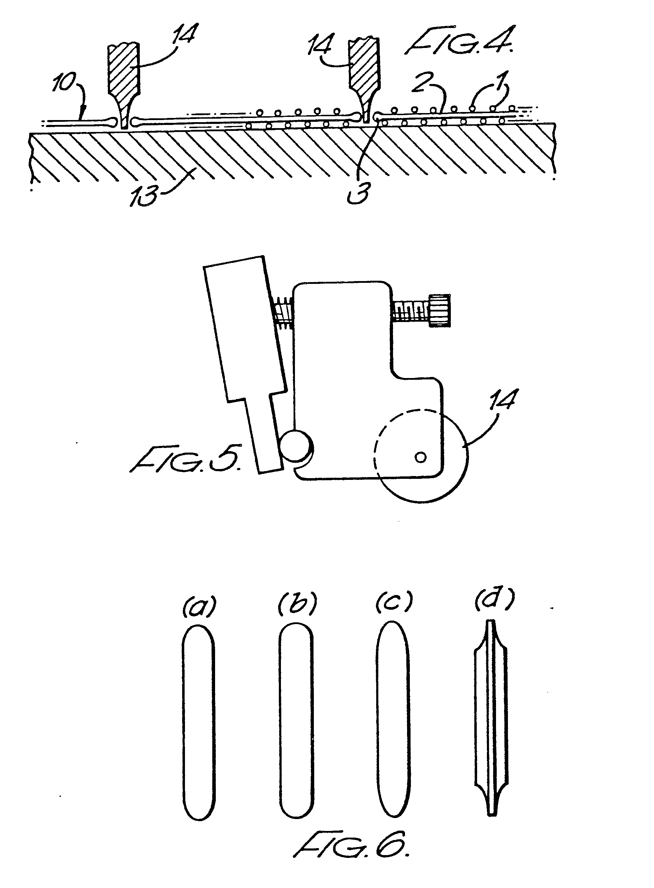

Referring to Figure 2, full width fabric 10 is fed from a feed-roller 11 around a guide-roller 12 and over the horn 13 of an ultrasonic generator operating at a frequency between 20 and 200, preferably 20 or 40, kHz. As the fabric passes over the top of the horn 13 is it supported by the horn and pressed by a series of pressing/cutting elements 14 which cause the thermoplastics material of the weft threads which they engage to soften and, by virtue of the fact that the fabric is moving, to "smear" or merge into the following weft thread or threads. Cooling air is applied to the horn 13 and to the fabric 10 as it emerges from between the horn 13 and the pressing/cutting elements 14, in order rapidly to cool the continuous cut and fused edges 3 of the interlining strips. The strips are thereafter passed over a guide-roller 15 and wrapped around a take-up roll 16.

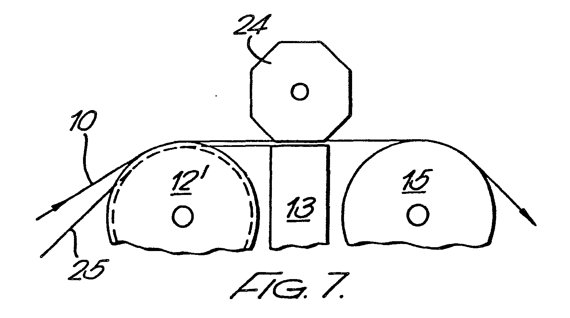

The operation of the pressing/cutting element 14 is best seen in Figure 4. The element 14, which as shown is in the form of a disc, is preferably pivotally mounted, as shown in Figure 5, in order to exert a uniform pressure on the fabric 10. Fine control is possible when the spring is under the control of a pneumatic cylinder. The element 14 may have any desired shape, which is dependent on the desired configuration of the continuous edge 3. A selection of typical element shapes is shown in Figure 6. The cutting element shown in Figure 6(d) is in the form of a hollow ground "blade". Typically the pressing/cutting elements have "knife edges" of angle 75°, 90°, 120° or 140°.

Figure 7 shows an apparatus, similar to that of Figure 2, but for use with an ancillary thermoplastics monofilament. The apparatus includes a pressing/cutting element 24 of octagonal shape, one pressing edge of which may be used at a time, and the guide roller 12' has one or more circumferential grooves to accommodate the ancillary monofilament(s) 25, the grooves being in alignment with the pressing elements 24. In operation, the ancillary monofilament 25 is fed between the full-width fabric 10 and the horn 13, and in alignment with the pressing element 24. Both the weft of the fabric 10 and the ancillary monofilament 25 are melted, thus "cutting" the fabric, and the ends of the weft threads fuse into each other and into monofilament 25 to form the continuous edge.

In an alternative construction the thread 25 may be guided between the element 24 and horn 13 by means of a guide tube situated between guide roller 12 and horn 13. There will naturally be one such guide tube for each ancillary monofilament 25.

A typical operating frequency for the ultrasonic generator is 20 kHz. Typical operating speeds (i.e. feed and draw-off speeds) are 10m/minute for 400 denier woven fabric and 420 denier knitted fabric, 16m/minute for 250 denier knitted fabric.

By virtue of the method of this invention it is possible to produce, in one operation, a waistband interlining strip having a flexible continuous thermoplastics edge which assists in the manufacture of garments and which provides protection against weft penetration of the waistband shell fabric throughout the life of the garment.

## Claims

1. A method of producing a waistband interlining comprising weaving or knitting a fabric comprising warp threads (1) and weft threads (2) of which the weft threads are formed of a thermoplastics material, and cutting the fabric by passing the fabric between a pressing element (14) and the horn (13) of an ultrasonic generator whereby the weft threads are melted as they pass between said element and said horn and are caused to fuse into adjacent weft threads to form a continuous edge along the length of the cut fabric, characterized in that the fabric to be cut is passed over the surface of said horn whereon it is contacted by said pressing element, the fabric is supported on both sides of the cutting line, the pressing element is stationary and the fabric is cut along lines parallel to the warp threads.

2. A method as claimed in claim 1 wherein the weft of the fabric is a thermoplastics monofilament.

3. A method as claimed in claim 2 wherein the weft of the woven fabric is a nylon monofilament.

4. A method as claimed in any of claims 1 to 3, wherein the warp of the fabric is of cotton or spun polyester.

5. A method as claimed in any of claims 1 to 4 wherein the formed continuous edge has a diameter less than or equal to the thickness of the fabric.

6. A method as claimed in any of claims 1 to 5 wherein an ancillary thermoplastics thread (25) is introduced between the pressing element and the horn, and is melted and fused to the molten weft threads forming the continuous edge.

7. A method as claimed in claim 6 wherein the ancillary thread is a thermoplastics monofilament.

8. Apparatus for carrying out the method of claim 1, comprising one or more stationary pressing elements positioned above one or more horns connected to ultrasonic generators.

9. Apparatus as claimed in claim 8 wherein a guide roller having one or more circumferential grooves is used to align the thermoplastic thread or threads with a respective pressing element.

**Patentansprüche**

1. Verfahren zur Herstellung einer Taillenbundverstärkung, wobei das Verfahren das Weben oder Wirken eines Gewebes, das Kettenfäden (1) und Schußfäden (2) enthält, wobei die Schußfäden von einem thermoplastischen Werkstoff gebildet werden, sowie das Schneiden des Gewebes enthält, indem das Gewebe zwischen einem Preßelement (14) und dem Schalltrichter (13) eines Ultraschllgenerators läuft, wobei die Schußfäden geschmolzen werden, wenn sie zwischen dem Element und dem Schalltrichter laufen, und in die benachbarten Schußfäden schmelzen, um entlang der Länge des geschnittenen Gewebes eine Endloskante auszubilden, wobei das Verfahren dadurch gekennzeichnet ist, daß das zu schneidende Gewebe über die Oberfläche des Schalltrichters läuft, worauf es mit dem Preßelement in Berührung tritt, wobei das Gewebe an beiden Seiten der Schnittkante gehalten wird, wobei das Preßelement ortsfest liegt und das Gewebe längs Kanten parallel zu den Kettenfäden geschnitten wird.

2. Verfahren gemäß Anspruch 1, wobei der Schuß des Gewebes aus einem thermoplastischen Einzelfaden besteht.

3. Verfahren gemäß Anspruch 2, wobei der Schuß der Webware ein Nylon-Einzelfaden ist.

4. Verfahren gemäß jedem der Ansprüche 1 bis 3, wobei die Kette des Gewebes aus Baumwolle oder gesponnenem Polyester besteht.

5. Verfahren gemäß jedem der Ansprüche 1 bis 4, wobei die ausgebildete Endloskante einen Durchmesser besitzt, der kleiner oder gleich der Dicke des Gewebs ist.

6. Verfahren gemäß jedem der Ansprüche 1 bis 5, wobei ein thermoplastischer Hilfsfaden (25) zwischen dem Preßelement und dem Schalltrichter eingeführt wird, wobei er geschmolzen und mit den geschmolzenen Schußfäden verschmolzen wird, um die Endloskante zu bilden.

7. Verfahren gemäß Anspruch 6, wobei der Hilfsfaden ein thermoplastischer Einzelfaden ist.

8. Vorrichtung, um das Verfahren gemäß Anspruch 1 auszuführen, wobei die Vorrichtung ein oder mehrere ortsfeste Preßelemente besitzt, die oberhalb von einem oder mehreren Schalltrichtern angeordnet sind, die mit Ulraschallgeneratoren in Verbindung stehen.

9. Vorrichtung gemäß Anspruch 8, wobei eine Führungsrolle, die ein oder mehrere Umfangsrillen besitzt, dazu verwendet wird, um den oder die thermoplastischen Fäden im Hinblick auf das Preßelement auszurichten.

**Revendications**

1. Un procédé de production d'un entoilage de ceinture comprenant le tissage ou le tricotage d'un tissu comprenant des fils de chaîne (1) et des fils de trame (2), dont les fils de trame sont constitués d'une matière thermoplastique, et la coupe du tissu par passage du tissu entre un élément de pression (14) et la corne (13) d'un générateur d'ultrasons de façon que les fils de trame soient en fusion lorsqu'ils passent entre ledit élément et ladite corne et soient réunis par fusion aux fils de trame adjacents pour former un bord continu sur la longueur du tissu découpé, caractérisé en ce que le tissu à découper est passé sur la surface de ladite corne, sur laquelle il est mis en contact par ledit élément de pression, que le tissu est supporté des deux côtés de la ligne de coupe, que l'élément de pression est fixe et que le tissu est découpé suivant des lignes parallèles aux fils de chaîne.

2. Un procédé selon la revendication 1, dans lequel la trame du tissu est un monofilament de matière thermoplastique.

3. Un procédé selon la revendication 1, dans lequel la trame du tissu est un monofilament de nylon.

4. Un procédé selon l'une quelconque des revendications 1 à 3, dans lequel la chaîne du tissu est un coton ou un filé de polyester.

5. Un procédé selon l'une quelconque des revendications 1 à 4, dans lequel le diamètre du bord continu formé est inférieur ou égal à l'épaisseur du tissu.

6. Un procédé selon l'une quelconque des revendications 1 à 5, dans lequel le fil auxiliaire de matière thermoplastique (25) est introduit entre l'élément de pression et la corne et est fondu et réuni par fusion aux fils de trame en fusion formant le bord continu.

7. Un procédé selon la revendication 6, dans lequel le fil auxiliaire est un monofilament thermoplastique.

8. Appareil pour exécuter le procédé de la revendication 1, comprenant un ou plusieurs éléments de pression fixes, disposés au dessus d'une ou de plusieurs cornes raccordées à des générateurs d'ultrasons.

9. Appareil selon la revendication 8, dans lequel un rouleau de guidage possédant une ou plusieurs rainures périphériques est utilisé pour aligner le ou les fils de matière thermoplastique sur un élément de pression correspondant.

FIG. 1.

FIG. 2.

PRESSURE ROLLER

FIG. 3.

14  14  FIG.4.

10  2  1

13  3

FIG.5.  14

(a)  (b)  (c)  (d)

FIG.6.

FIG. 7.